# EUROPEAN PATENT SPECIFICATION

(11) **EP 2 200 229 B1**
(45) Date of publication and mention of the grant of the patent: **07.03.2012**
(21) Application number: 08291207.2
(22) Date of filing: 18.12.2008
(51) Int. Cl.: H04L 12/56

(54) **Method and apparatus for delivering error-critical traffic through a packet-switched network**
Verfahren und Vorrichtung zur Lieferung fehlerkritischen Verkehrs über ein Paketvermittlungsnetzwerk
Procédé et appareil pour fournir un trafic d'erreur critique via un réseau commuté par paquets

(43) Date of publication of application: 23.06.2010
(73) Proprietor: Alcatel Lucent, 75007 Paris (FR)
(72) Inventor: van Caenegem, Tom, 9820 Scheldrode (BE)
(74) Representative: Anderlini, Alain

(56) References cited:
- CAENEGEM VAN T N M ET AL: "Maintaining video quality and optimizing video delivery over the bandwidth constrained DSL last mile through intelligent packet drop" BELL LABS TECHNICAL JOURNAL, WILEY, CA, US, vol. 1, no. 13, 21 March 2008 (2008-03-21), pages 53-68, XP001512246 ISSN: 1089-7089

## Description

The present invention relates to a method for delivering error-critical traffic, such as IPTV traffic, through a packet-switched network.

Packet switched networks are unreliable per se, meaning they offer no guarantee that they will not delay, damage, or lose packets, or deliver them out of order.

Forward Error correction (FEC) and Retransmission are the basic error control paradigms for providing reliable communication over a packet switched network.

Retransmission is the resending of data packets which have been either lost or corrupted, and relies on:
- checksums (or alike) for checking the integrity of the received information,
- acknowledgments, that is to say explicit receipts from the receiver towards the sender through some return channel, and
- retransmission of missing or damaged packets (initiated by the sender or the receiver).

Retransmission implies that a copy of each outstanding packet (i.e., not yet acknowledged) is kept at the sender side for further retransmission, if any.

There are several forms of retransmission strategies, most noticeably:
- selective Acknowledgment (SACK): the receiver explicitly notifies the sender which packets, messages, or segments were received correctly, and by the way which packets were not.
- cumulative Acknowledgment: the receiver acknowledges a packet, message, or segment as being received correctly, which acknowledgment implying that all previous packets were received correctly too. Transport control Protocol (TCP) uses cumulative acknowledgment.
- Negative Acknowledgment (NACK): the receiver explicitly notifies the sender which packets, messages, or segments were received incorrectly and thus are to be retransmitted.

Retransmission is disadvantageous for multicast transmission, such as IPTV services, in that a considerable amount of data packets needs to be held at the server side or at an intermediate network node so as to achieve an acceptable Quality of Experience (QoE) for the end-user. The size of the retransmission cache depends on the Round Trip Time (RTT) from the receiver to the retransmission unit, and on the number of re-transmission that might be necessary for the requested packet to eventually reach the receiver (i.e., on the noise and/or network environment a subscriber may undergo). Typically, the last 100-200 ms of video information (i.e., about 50 to 100 data packets) need to be cached for each and every broadcasted channels, similarly, a considerable amount of dedicated unicast communication resources needs to be provisioned for packet retransmission so as to serve many subscribers, clearly, such a solution is not scalable as the number of subscribers and channels grow.

FEC is the addition of redundant data to the information data. This allows the receiver to detect and correct errors by itself (within some bound), yet at the expense of some data overhead. FEC is therefore applied in situations where retransmissions are relatively costly or impossible.

The two main categories of FEC are block coding, such as Reed solomon (RS), Golay, Bose and Ray-chaudhuri (BCH) and Hamming codes, and convolutional coding. The most recent development in error correction is turbo coding, a scheme that combines two or more relatively simple convolutional codes and an interleaver to produce a block code that can perform to within a fraction of a decibel of the shannon limit.

FEC is disadvantageous too in that a considerable amount of data overhead is required to achieve an acceptable QoE.

For IPTV services, a user can subscribe to a FEC stream in addition to the IPTV stream. Both streams are typically assigned the same high scheduling priority so as to be conjointly-and-in-time delivered, thereby requiring the provisioning of a corresponding channel bandwidth over the last mile, and preventing that channel bandwidth to be used by concurrent low-priority services, such as Internet browsing.

An hybrid solution that combines both retransmission and FEC error protection is sometimes preferred when the FEC code is broken, a retransmission server takes over and retransmits the erroneous packets.

This combined solution limits the amount of required bandwidth and/or the number of retransmission servers. However, with this current hybrid solution, FEC still consumes a significant amount of bandwidth over the last mile, and is typically not optimized on a per user basis taking into account the last mile line rate, the true available bandwidth on the last mile because of other concurrent services, and the end-to-end packet loss condition.

The article entitled *"*Maintaining video Quality and optimizing video Delivery over the Bandwidth Constrained DSL Last Mile through Intelligent Packet Drop", published by the Bell Labs Technical Journal, vol. 1, no. 13, p. 53-68, in March 2008, discloses a method for improving the QOE by intelligent packet drop. Indeed, some packets containing video information (e.g., I-picture or P-picture) are more important than others (e.g., B-picture), and this importance level can be indicated in the packet header, when congestion in a DSLAM occurs, the low priority packets are preferentially dropped. Provided some picture loss concealment is performed in the set top box (e.g., picture freezing), the QoE is maintained, as evidenced by subjective tests that have been conducted.

It is an object of the present invention to improve the service reach for IPTV while achieving an acceptable QOE.

The objectives of the present invention are achieved and the aforementioned shortcomings of the prior art are overcome by a method for delivering error-critical traffic through a packet-switched network, and comprising the steps of:
- identifying first data packets conveying a particular error-critical traffic payload, second data packets conveying Forward Error control FEC information for self-recovering said particular traffic payload, and third data packets conveying a retransmitted part of said particular traffic payload,
- assigning a first traffic priority level to said first data packets, a second traffic priority level to said second data packets, and a third traffic priority level to said third data packets, and
- delivering said first data packets, said second data packets and said third data packets through said packet-switched network according to their respective traffic priority level,
characterized in that said first traffic priority level and said third traffic priority level have a higher scheduling precedence than a best effort traffic priority level, while said second traffic priority level has a lower scheduling precedence than said best effort traffic priority level.
- The traffic payload, the FEC code for self-recovering that traffic payload, and the retransmitted payload are encapsulated into distinct packet flows, and are assigned different scheduling priorities with respect to the best effort traffic class, also referred to as the high speed Internet traffic class. FEC packets are scheduled with a lower precedence compared to the best effort traffic class, meaning that FEC packets are only delivered if there is enough bandwidth available over the last mile. If payload packets are lost while FEC packets are not delivered or only partly delivered, then the retransmission server kicks in and retransmits the missing payload. The retransmitted packets will push away some of the FEC and best effort packets, but this is only temporary (a few 100 ms max.), and only when packet loss occurs that is not FEC-recoverable.

When, next to IPTV services, the service consumption on a particular line is low, FEC packets will get through, and the load on the retransmission servers from that specific end user will be negligible, when the service consumption is high, the retransmission servers will provide (almost) all the packet loss protection service.

Consequently, the retransmission servers are relieved, and there is no need to provision some of the last mile bandwidth for the FEC overhead, thereby improving the service reach for IPTV.

A further embodiment of a method according to the invention is characterized in that said method further comprises the step of discarding a particular data packet out of said second data packets protecting a particular part of said particular traffic payload if said particular data packet is expected to be scheduled for transmission not sooner than a pre-determined time after the scheduling of said particular part.

As FEC packets are scheduled with a lower precedence than payload packets, it might be useless to transmit them if, on account of network congestion, they arrive too late, either because the corresponding part has been already played out, or because retransmission has been already asked for.

This embodiment is further advantageous as the corresponding egress queue is released for other concurrent services belonging to the same traffic class as the FEC packets.

The present invention also relates to a network unit for delivering error-critical traffic through a packet-switched network, and comprising:
- a traffic classification means adapted to identify first data packets conveying a particular error-critical traffic payload, second data packets conveying Forward Error control FEC information for self-recovering said particular traffic payload, and third data packets conveying a retransmitted part of said particular traffic payload,
- a traffic priority assignment means adapted to assign a first traffic priority level to said first data packets, a second traffic priority level to said second data packets, and a third traffic priority level to said third data packets, and
- a scheduler adapted to deliver said first data packets, said second data packets and said third data packets through said packet-switched network according to their respective traffic priority level,
characterized in that said first traffic priority level and said third traffic priority level have a higher scheduling precedence than a best effort traffic priority level, while said second traffic priority level has a lower scheduling precedence than said best effort traffic priority level.

The network unit may be an access node, such as a Digital Subscriber Line Access Multiplexer (DSLAM) located at a central office or at a remotely deployed cabinet, or may be distributed over of at least one server, such as a video head end and a retransmission server.

Embodiments of a network unit according to the invention correspond with the embodiments of a method according to the invention.

The above and other objects and features of the invention will become more apparent and the invention itself will be best understood by referring to the following description of an embodiment taken in conjunction with the accompanying drawings wherein:
- fig. 1 represents a packet-switched network,
- fig. 2 represent a first and a second traffic repartition over the last mile.

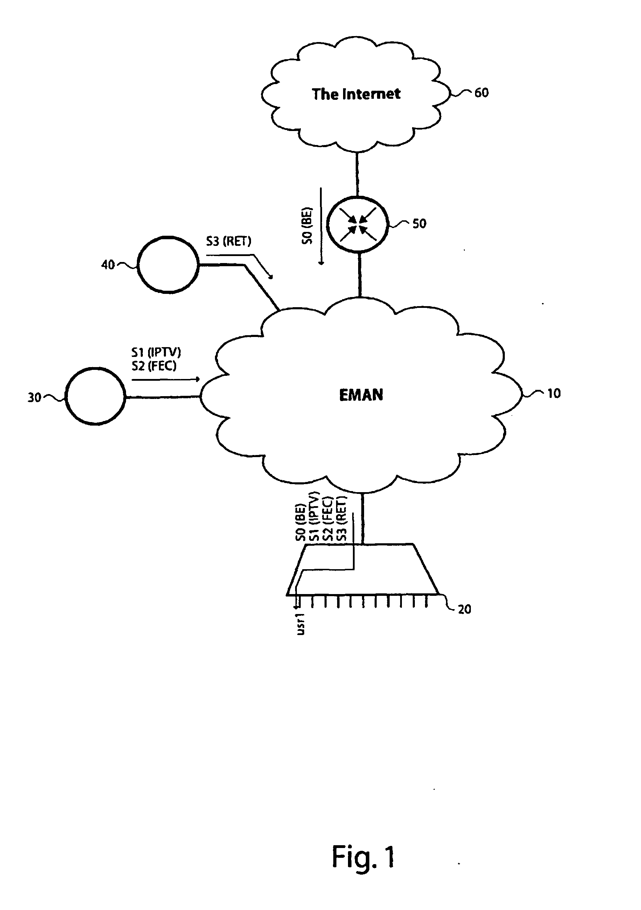

There is seen in fig. 1 an IP-based packet-switched network comprising the following elements:
- an Ethernet Metropolitan Area Network (EMAN) 10,
- an access node 20, such as a DSLAM, to which a particular subscriber usr1 is coupled,
- a video head end 30 adapted to encode an audio/video broadcast channel into a first multicast stream S1 conveying audio/video information (or payload) and a second multicast stream S2 conveying FEC information for self-recovering missing data packets within the multicast stream s1, and further adapted to deliver the first and second multicast streams s1 and s2 through the EMAN 10 towards recipients that subscribe thereto (inc. usr1) ,
- a retransmission server 40 for re-transmitting missing payload packets towards a requesting client, presently usr1, thereby yielding a third unicast stream S3,
- an edge router 50 that acts as the IP gateway for the subscribers connected to the access node 10 (inc. usr1), and
- the Internet 60.

The YEMAN 10 is coupled to the access node 20, the video head end 30, the retransmission server 40 and the edge router 50. The edge router 50 is further coupled to the Internet 60.

The video head end 30 and the retransmission server 40 may be located deeper in the network, and coupled to an Internet service Provider (ISP) network (not shown), or to the Internet 60.

The access node 20 acts as a L2 switch, and comprises the following noticeable functional blocks (not shown):
- line termination cards for connecting to the subscriber loops,
- network termination cards for connecting to the EMAN 10,
- an Ethernet switch fabric, or an emulation thereof,
- a traffic classification means forming part of e.g. the network or line termination cards, and adapted to discriminate, from the incoming downstream traffic, first data packets S1 carrying audio/video payload (IPTV), second data packets s2 carrying FEC information for self-recovering the audio/video payload (FEC), third data packets S3 carrying retransmitted audio/video payload (RET), and other data packets S0, such as data packets carrying best effort services (BE),
- a frame tagging means (which has to be regarded as the claimed traffic priority assignment means) forming part of e.g. the line termination cards, and adapted to tag (or re-tag) data packets S0, S1, S2 and S3 with respective Priority code Points (PCP) P0, P1, P2 and P3 respectively, which PCP being a 3-bit field forming part of the virtual Local Area Network (VLAN) tag as defined in 802.1Q standard from the Institute of Electrical and Electronics Engineers (IEEE), and indicating the frame scheduling priority level from 0 (lowest) to 7 (highest),
- schedulers forming part of the line termination cards, and adapted to schedule frames according to their PCP for downstream transmission through the subscriber loops.

P0, P1, P2 and P3 are selected among the PCP allowable set 0-7, and satisfy the following equations:
- P1 > P0, meaning that audio/video packets S1 are scheduled with a higher precedence than best effort packets S0,
- P2 < P0 (or alternatively, P2 = P0), meaning that FEC packets S2 are scheduled with a lower (or alternatively, equal) precedence than best effort packets S0,
- P3 > P0 (for instance, P1 > P3 > P0, or P3 = P1 > P0, or P3 > P1 > P0), meaning that retransmitted packets S3 are scheduled with a higher precedence than best effort packets S0.

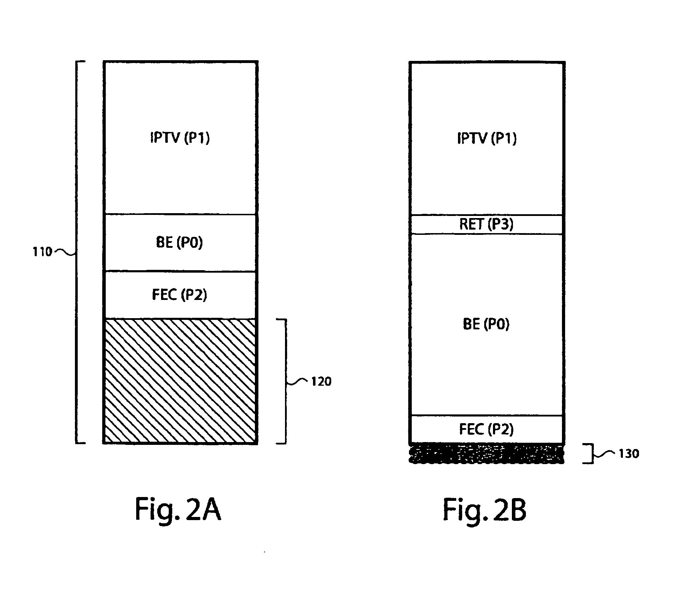

There is seen in fig. 2A and 2B a first and a second traffic repartition over the subscriber loop connecting the subscriber usr1, and corresponding to a low and high service consumption respectively.

The different traffic classes are depicted with the highest-priority traffic class on the top, and the lowest-priority traffic class on the bottom. The area under each traffic class rectangle is representative of the amount of traffic for that traffic class, and the whole area is representative of the total available bandwidth over the subscriber loop (see 110 in fig. 2A), while the shaded area is representative of the remaining bandwidth (see 120 in fig. 2A).

It is assumed that the first and second traffic repartitions correspond to the same noise environment for the subscriber usr1, that is to say to the same packet loss ratio. It is further assumed that this ratio remains within the limit of the FEC correction capabilities.

As it can be easily seen in fig. 2A, all the FEC packets can be delivered in good order, and if a few payload packets were missing on account of e.g. crosstalk, then they are recoverable. At this service consumption level, the retransmission server 40 is not relied on, and the FEC provides (almost) all the packet loss protection service.

Yet, and as it can be seen in fig. 2B, when the best effort service consumption increases beyond a certain threshold, more and more FEC packets are discarded (see 130 in fig. 2B), and subscriber usr1 has to rely more and more on packet retransmission for recovering missing payload packets, if any. The retransmitted packet are depicted in fig. 2B as a very thin area (see RET in fig. 2B) as retransmitted packets occupy a small amount of the available bandwidth 110 compared to the FEC overhead. At this service consumption level, the retransmission server 40 takes over the packet loss protection service.

In a further embodiment of the present invention, the access node 20 further comprises a frame discarding means for discarding FEC packets that are pending for a too long time after their corresponding payload was transmitted. A specific waiting-time threshold can then be defined, beyond which FEC packets are discarded.

In an alternative embodiment of the present invention, the traffic classification means and the frame tagging means according to the invention forms part of the video head end 30 and the re-transmission server 40, in which case data packets S1, S2 and s3 are tagged with their respective PCP before they enter the EMAN 10, the access node scheduling them according to their respective priority.

In still an alternative embodiment of the present invention, the tagging is carried out at L3 by means of Differentiated service code Point (DSCP) field, or Type of Service (ToS) field, in the IP header, and the access node 20 acts as a L3 device that schedule IP datagrams according to their respective L3 priority tag.

In still an alternative embodiment of the present invention, there is no frame tagging, yet frames are pushed into their respective egress queues depending on the classification outcome, each egress queue corresponding to a specific scheduling priority. This embodiment is particularly helpful for prioritizing the traffic over a portion of the network, e.g. over the last mile only where network congestion is more likely to happen. This embodiment would be advantageously implemented in an access node.

It is to be noticed that the term 'comprising', also used in the claims, should not be interpreted as being restricted to the means listed thereafter. Thus, the scope of the expression 'a device comprising means A and B' should not be limited to devices consisting only of components A and B. It means that with respect to the present invention, the relevant components of the device are A and B.

It is to be further noticed that the term 'coupled', also used in the claims, should not be interpreted as being restricted to direct connections only. Thus, the scope of the expression 'a device A coupled to a device B' should not be limited to devices or systems wherein an output of device A is directly connected to an input of device B, and/or vice-versa. It means that there exists a path between an output of A and an input of B, and/or vice-versa, which may be a path including other devices or means.

The embodiments of the present invention are described above in terms of functional blocks. From the functional description of these blocks, given above, it will be apparent for a person skilled in the art of designing electronic devices how embodiments of these blocks can be manufactured with well-known electronic components. A detailed architecture of the contents of the functional blocks hence is not given.

While the principles of the invention have been described above in connection with specific apparatus, it is to be clearly understood that this description is made only by way of example and not as a limitation on the scope of the invention, as defined in the appended claims.

## Claims

1. A method for delivering error-critical traffic through a packet-switched network, and comprising the steps of:
- identifying first data packets (S1) conveying a particular error-critical traffic payload (IPTV), second data packets (S2) conveying Forward Error control FEC information (FEC) for self-recovering said particular traffic payload, and third data packets (S3) conveying a retransmitted part (RET) of said particular traffic payload,
- assigning a first traffic priority level (P1) to said first data packets, a second traffic priority level (P2) to said second data packets, and a third traffic priority level (P3) to said third data packets, and
- delivering said first data packets, said second data packets and said third data packets through said packet-switched network according to their respective traffic priority level,
***characterized in that*** said first traffic priority level and said third traffic priority level have a higher scheduling precedence than a best effort traffic priority level (P0), while said second traffic priority level has a lower scheduling precedence than said best effort traffic priority level.

2. A method according to claim 1, ***characterized in that*** said method further comprises the step of discarding a particular data packet out of said second data packets protecting a particular part of said particular traffic payload if said particular data packet is expected to be scheduled for transmission not sooner than a pre-determined time after the scheduling of said particular part.

3. A network unit (20, 30, 40) for delivering error-critical traffic through a packet-switched network, and comprising:
- a traffic classification means adapted to identify first data packets (S1) conveying a particular error-critical traffic payload (IPTV), second data packets (s2) conveying Forward Error Control FEC information (FEC) for self-recovering said particular traffic payload, and third data packets (S3) conveying a retransmitted part (RET) of said particular traffic payload,
- a traffic priority assignment means adapted to assign a first traffic priority level (P1) to said first data packets, a second traffic priority level (P2) to said second data packets, and a third traffic priority level (P3) to said third data packets, and
- a scheduler adapted to deliver said first data packets, said second data packets and said third data packets through said packet-switched network according to their respective traffic priority level,
***characterized in that*** said first traffic priority level and said third traffic priority level have a higher scheduling precedence than a best effort traffic priority level (P0), while said second traffic priority level has a lower scheduling precedence than said best effort traffic priority level.

4. A network unit according to claim 3, ***characterized in that*** said network unit is an access node (20).

5. A network unit according to claim 3, ***characterized in that*** said network unit is distributed over at least one server (30, 40).

## Patentansprüche

1. Verfahren zur Lieferung fehlerkritischen Verkehrs über ein paketvermitteltes Netzwerk, welches die folgenden Schritte umfasst:
- Identifizieren von ersten Datenpaketen (S1), welche einen bestimmten fehlerkritischen Nutzdatenverkehr (IPTV) befördern, von zweiten Datenpaketen (S2), welche Vorwärtsfehlerkorrektur- bzw. FEC-Informationen (FEC) für die Selbsterholung des besagten bestimmten Nutzdatenverkehrs befördern, und von dritten Datenpaketen (53), welche einen erneut übertragenen Teil (RET) des besagten bestimmten Nutzdatenverkehrs befördern,
- Zuweisen einer ersten Verkehrsprioritätsstufe (P1) an die besagten ersten Datenpakete, einer zweiten Verkehrsprioritätsstufe (P2) an die besagten zweiten Datenpakete, und einer dritten Verkehrsprioritätsstufe (P3) an die besagten dritten Datenpakete, und
- Liefern der besagten ersten Datenpakete, der besagten zweiten Datenpakete und der besagten dritten Datenpakete gemäß deren jeweiliger Verkehrsprioritätsstufe über das besagte paketvermittelte Netzwerk,
***dadurch gekennzeichnet, dass*** die besagte erste Verkehrsprioritätsstufe und die besagte dritte Verkehrsprioritätsstufe einen höheren Planungsvorrang haben als eine Best-Effort-Verkehrsprioritätsstufe (P0), während die besagte zweite Verkehrsprioritätsstufe einen niedrigeren Planungsvorrang als die besagte Best-Effort-Verkehrsprioritätsstufe hat.

2. Verfahren nach Anspruch 1, ***dadurch gekennzeichnet, dass*** das besagte Verfahren weiterhin den Schritt des Verwerfens eines bestimmten Datenpakets aus den besagten zweiten Datenpaketen, welche einen bestimmten Teil des besagten bestimmten Nutzdatenverkehrs schützen, umfasst, wenn erwartet wird, dass das die Übertragung des besagten bestimmten Datenpakets nicht früher als ein vorbestimmter Zeitpunkt nach der Planung des besagten bestimmten Teils geplant ist.

3. Netzwerkeinheit (20, 30, 40) für die Lieferung fehlerkritischen Verkehrs über ein paketvermitteltes Netzwerk, und umfassend:
- Ein Verkehrsklassifizierungsmittel, welches dazu ausgelegt ist, erste Datenpakete (S1), die einen bestimmten fehlerkritischen Nutzdatenverkehr (IPTV) befördern, zweite Datenpakete (S2), die Vorwärtsfehlerkorrektur- bzw. FEC-Informationen (FEC) für die Selbsterholung des besagten bestimmten Nutzdatenverkehrs befördern, und dritte Datenpakete (53), die einen erneut übertragenen Teil (RET) des besagten bestimmten Nutzdatenverkehrs befördern, zu identifizieren,
- ein Verkehrsprioritätszuweisungsmittel, welches dazu ausgelegt ist, den besagten ersten Datenpaketen eine erste Verkehrsprioritätsstufe (P1), den besagten zweiten Datenpaketen eine zweite Verkehrsprioritätsstufe (P2) und den besagten dritten Datenpaketen eine dritte Verkehrsprioritätsstufe (P3) zuzuweisen, und
- einen Scheduler, welcher dazu ausgelegt ist, die besagten ersten Datenpakete, die besagten zweiten Datenpakete und die besagten dritten Datenpakete gemäß deren jeweiliger Verkehrsprioritätsstufe über das besagte paketvermittelte Netzwerk zu liefern,
***dadurch gekennzeichnet, dass*** die besagte erste Verkehrsprioritätsstufe und die besagte dritte Verkehrsprioritätsstufe einen höheren Planungsvorrang haben als eine Best-Effort-Verkehrsprioritätsstufe (P0), während die besagte zweite Verkehrsprioritätsstufe einen niedrigeren Planungsvorrang als die besagte Best-Effort-Verkehrsprioritätsstufe hat.

4. Netzwerkeinheit nach Anspruch 3, ***dadurch gekennzeichnet, dass*** die besagte Netzwerkeinheit ein Zugangsknoten (20) ist.

5. Netzwerkeinheit nach Anspruch 3, ***dadurch gekennzeichnet, dass*** die besagte Netzwerkeinheit über mindestens einen Server (30, 40) verteilt ist.

## Revendications

1. Procédé pour délivrer un trafic sensible aux erreurs à travers un réseau à commutation de paquets comprenant les étapes suivantes :
- identification de premiers paquets de données (S1) transportant une charge utile de trafic sensible aux erreurs (IPTV) particulière, des deuxièmes paquets de données (S2) transportant une information FEC de correction d'erreur directe (FEC) pour l'auto-restauration de ladite charge utile de trafic particulière et des troisièmes paquets de données (S3) transportant une partie retransmise (RET) de ladite charge utile de trafic particulière,
- attribution d'un premier niveau de priorité de trafic (P1) auxdits premiers paquets de données, d'un deuxième niveau de priorité de trafic (P2) auxdits deuxièmes paquets de données et d'un troisième niveau de priorité de trafic (P3) auxdits troisièmes paquets de données, et
- délivrance desdits premiers paquets de données, desdits deuxièmes paquets de données et desdits troisièmes paquets de données à travers ledit réseau à commutation de paquets conformément à leur niveau de priorité de trafic correspondant
***caractérisé en ce que*** ledit premier niveau de priorité de trafic et ledit troisième niveau de priorité de trafic possèdent une priorité d'ordonnancement plus élevée qu'un niveau de priorité de trafic avec service au mieux (P0), alors que ledit deuxième niveau de priorité de trafic possède une priorité d'ordonnancement plus faible que ledit niveau de priorité de trafic avec service au mieux.

2. Procédé selon la revendication 1, ***caractérisé en ce que*** ledit procédé comprend en outre l'étape de suppression d'un paquet de données particulier desdits deuxièmes paquets de données protégeant une partie particulière de ladite charge utile de trafic s'il est attendu que la transmission dudit paquet de données particulier ne sera pas ordonnancée avant un instant donné après l'ordonnancement de ladite partie particulière.

3. Unité de réseau (20, 30, 40) pour délivrer un trafic sensible aux erreurs à travers un réseau à commutation de paquets et comprenant :
- moyens de classification de trafic adaptés pour identifier des premiers paquets de données (S1) transportant une charge utile de trafic sensible aux erreurs (IPTV) particulière, des deuxièmes paquets de données (S2) transportant une information FEC de correction d'erreur directe (FEC) pour l'auto-restauration de ladite charge utile de trafic particulière et des troisièmes paquets de données (S3) transportant une partie retransmise (RET) de ladite charge utile de trafic particulière,
- moyens d'attribution de priorité de trafic adaptés pour attribuer un premier niveau de priorité de trafic (P1) auxdits premiers paquets de données, un deuxième niveau de priorité de trafic (P2) auxdits deuxièmes paquets de données et un troisième niveau de priorité de trafic (P3) auxdits troisièmes paquets de données, et
- un ordonnanceur adapté pour délivrer lesdits premiers paquets de données, lesdits deuxièmes paquets de données et lesdits troisièmes paquets de données à travers ledit réseau à commutation de paquets conformément à leur niveau de priorité de trafic correspondant,
***caractérisé en ce que*** ledit premier niveau de priorité de trafic et ledit troisième niveau de priorité de trafic possèdent une priorité d'ordonnancement plus élevée qu'un niveau de priorité de trafic avec service au mieux (P0), alors que ledit deuxième niveau de priorité de trafic possède une priorité d'ordonnancement plus faible que ledit niveau de priorité de trafic avec service au mieux.

4. Unité de réseau selon la revendication 3, ***caractérisée en ce que*** ladite unité de réseau est un noeud d'accès (20).

5. Unité de réseau selon la revendication 3, ***caractérisée en ce que*** ladite unité de réseau est distribuée sur au moins un serveur (30, 40).
